# EUROPÄISCHE PATENTSCHRIFT

(11) **EP 3 907 172 B1**
(45) Veröffentlichungstag und Bekanntmachung des Hinweises auf die Patenterteilung: **16.08.2023**
(21) Anmeldenummer: 21171844.0
(22) Anmeldetag: 03.05.2021
(51) Int. Cl.: B66F 9/075, B66F 17/00

(54) **FLURFÖRDERZEUG**
INDUSTRIAL TRUCK
CHARIOT DE MANUTENTION

(30) Priorität: 04.05.2020 DE 102020205606
(43) Veröffentlichungstag der Anmeldung: 10.11.2021
(73) Patentinhaber: Jungheinrich Aktiengesellschaft, 22047 Hamburg (DE)
(72) Erfinder: SCHÖTTKE, Carsten, 85368 Moosburg (DE); BIBERNELL, Hubert, 84034 Landshut (DE); SCHÖNAUER, Michael, 85368 Moosburg (DE)
(74) Vertreter: Herzog, Markus

(56) Entgegenhaltungen:
- EP-A2- 1 022 166
- EP-A2- 2 500 237
- US-A1- 2005 156 391
- US-A1- 2006 182 588

## Beschreibung

Die vorliegende Erfindung betrifft Verbesserungen an Flurförderzeugen, insbesondere an Schmalgang-Staplern.

Ein typisches Problem, das bei Betrieb von Flurförderzeugen auftritt und die damit erreichbaren Umschlagraten begrenzt, sind Schwingungen des Hubgerüsts sowie Verformungen des Hubgerüsts bei einem Lastwechsel quer zur Fahrtrichtung sowie auch längs zur Fahrtrichtung. Insbesondere bei Schmalgang-Staplern, die Waren häufig in sehr große Höhen heben, wirken sich derartige Schwingungen aufgrund der geometrischen Verhältnisse besonders nachteilhaft aus. Weitere Aspekte, die in diesem Zusammenhang eine Rolle spielen können sind ein Niveauausgleich im Stand des Fahrzeugs und eine Kompensation von Verformungen im Fahrzeug durch das Ausschieben von Lasten. Demzufolge muss in der Praxis zum Erreichen einer maximalen Fahrgeschwindigkeit ohne zu große Querschwingungen des Hubgerüsts für eine perfekte Ebenheit des Untergrunds gesorgt werden, auf welchem sich das Flurförderzeug mit seinen Rädern fortbewegt. Dies verursacht jedoch hohe Kosten und erfordert eine regelmäßige Überprüfung und Wartung dieses Untergrunds.

Zur fahrzeugseitigen Reduktion der angesprochenen Schwingungen sind verschiedene Systeme vorgeschlagen worden, beispielsweise ist aus der EP 2 814 677 A1 bekannt, Oberflächeneigenschaften des Fahruntergrunds zu erfassen und auf Grundlage dieser Erfassung den erwarteten kinematischen Effekten auf das Flurförderzeug durch geeignete Maßnahmen entgegenzuwirken. Hierbei kann beispielsweise an ein aktives Fahrwerk gedacht werden, bei dem Einfluss auf die Räder des Flurförderzeugs genommen wird.

Eine spezielle Ausführungsform eines derartigen aktiven Fahrwerks ist wiederum beispielsweise aus der EP 3 309 111 B1 bekannt, in welcher vorgeschlagen wird, ein Lastrad eines Flurförderzeugs drehbar an mindestens einer Exzenterscheibe anzuordnen, die an dem Fahrzeugkörper um eine Drehachse gelagert ist, die wiederum von der Raddrehachse versetzt angeordnet ist.

Ferner sei auf die US 2006/182588 A1 sowie die EP 2 500 237 A2 verwiesen, welche ebenfalls Flurförderzeuge der eingangs genannten Art offenbaren Die US 2006/182588 A1 offenbart ein Flurförderzeug gemäß dem Oberbegriff des unabhängigen Anspruchs 1.

Es zeigt sich jedoch in der Praxis, dass sowohl die angesprochene Erfassung des Fahruntergrunds als auch die Lagerung von Lasträdern mittels Exzenterscheiben keine optimalen Lösungen für die Reduktion von Hubgerüstschwingungen in Flurförderzeugen darstellen.

Es ist demzufolge die Aufgabe der vorliegenden Erfindung, ein Flurförderzeug bereitzustellen, welches schwingungsreduzierende Maßnahmen aufweist, sodass es auch bei schlechteren Fahruntergründen eine hohe Geschwindigkeit erreichen kann, ohne dass hierdurch die Präzision der durch das Flurförderzeug zu vollführenden Aufgaben leiden würde.

Diese Aufgabe wird durch ein Flurförderzeug nach dem unabhängigen Anspruch 1 gelöst.

Neben dem angesprochenen Beispiel, in welchem das wenigstens eine weitere Rad als gelenktes Antriebsrad ausgebildet ist, sind auch andere Kombinationen von Antrieb und Lenkung denkbar, beispielsweise könnte das wenigstens eine Lastrad angetrieben sein, insbesondere als Teil einer angetriebenen Lastachse, so dass das weitere Rad dann ein gelenktes Rad ohne Antrieb sein könnte.

Hierbei kann die Erfassungseinheit insbesondere dazu eingerichtet sein, wenigstens Eines zu erfassen aus einer Neigung des Fahrzeugkörpers gegenüber dem Untergrund und/oder der Horizontalen und einer Beschleunigung und/oder einer Geschwindigkeit und/oder einer Neigung wenigstens einer Komponente des Flurförderzeugs und/oder einer von dem Flurförderzeug (10) getragenen Last gegenüber dem Untergrund und/oder wenigstens einer anderen Komponente des Flurförderzeugs, wobei die zu erfassende Beschleunigung insbesondere quer zu einer Fahrtrichtung des Flurförderzeugs gerichtet sein kann.

Demnach wird erfindungsgemäß zunächst auf Betriebsparameter des Flurförderzeugs selbst zurückgegriffen, beispielsweise indem ein Neigungssensor das Niveau des Fahrzeugkörpers absolut zur Horizontalen oder bezogen auf ein vorab definiertes Niveau bestimmt, beispielsweise auf einen um einen vordefinierten Winkel gegenüber der Horizontalen geneigten Untergrund. In einem derartigen Fall kann die Ansteuerung des Aktors zu einer Ausrichtung des Fahrzeugkörpers und damit des Hubgerüsts gegenüber der Horizontalen verwendet werden.

In einem anderen Beispiel können als Erfassungseinheiten mehrere Sensoren eingesetzt werden, beispielsweise ein erster Sensor auf der weiter unten noch ausführlicher angesprochenen Lastradachse und ein zweiter Sensor an einem von dieser Lastradachse entkoppelten Hinterteil des Fahrzeugkörpers. Indem nun die relative Lage der beiden Sensoren zueinander ermittelt wird, kann eine benötigte Aktorreaktion durch die Steuereinheit berechnet werden, mittels welcher die beiden angesprochenen Fahrzeugkomponenten wieder in eine optimale Ausrichtung zueinander gelangen können.

In einer weiteren Variante könnte auch ein erster Sensor einem ersten beweglich angeordneten Lastrad zugeordnet sein, ein zweiter Sensor einem zweiten beweglich angeordneten Lastrad und ein dritter Sensor an dem von den Rädern entkoppelten Fahrzeugkörper. Diese Variante bietet sich für Ausführungsformen des erfindungsgemäßen Flurförderzeugs an, in denen auf eine starre Lastradachse verzichtet wird.

Weiterhin kann der momentane Betriebsparameter einen Bewegungszustand, wie beispielsweise eine Geschwindigkeit oder eine Beschleunigung einer Fahrzeugkomponente oder eine Position des Fahrzeugs, umfassen. Als Beispiel hierfür kann an einen Beschleunigungssensor gedacht werden, welcher einen Beschleunigungsvektor im Wesentlichen quer zur Fahrtrichtung des Flurförderzeugs, beispielsweise am Hubgerüst oder an einem angehobenen Lastteil, erfasst. Hieraus kann dann durch die Steuereinheit eine Aktorreaktion bestimmt werden, welche diesem Beschleunigungsvektor entgegenwirkt bzw. wenigstens dessen Betrag minimiert.

In diesem Zusammenhang könnte durch eine kontinuierliche Integration von derartigen Beschleunigungsvektoren ab einem gewissen Startzustand ein Geschwindigkeitsvektor und weiter eine relative Positionsangabe ermittelt werden. Die beiden eben angesprochenen Beispiele können auch in Kombination miteinander oder komplementär zueinander in einem einzelnen erfindungsgemäßen Flurförderzeug zum Einsatz kommen.

Selbstverständlich kann zudem wenigstens eine weitere Erfassungseinheit an dem Flurförderzeug vorgesehen sein, welche dazu eingerichtet ist, wenigstens eine Eigenschaft der Umgebung des Flurförderzeugs zu erfassen und entsprechende Daten an die Steuereinheit auszugeben. Die Erfassung der Umgebung schließt hierbei ein Erfassen des Fahruntergrunds ein, ist jedoch nicht hierauf beschränkt, sondern es können auch andere Wegmarken oder Objekte in der Umgebung des Fahrzeugs erfasst werden. Mögliche Ausführungsformen für derartige Erfassungseinheiten umfassen Laser-, Ultraschall- und Radar-Sensoren, welche beispielsweise Bereiche vor oder neben dem wenigstens einen Lastrad abtasten. Hierdurch können Projektionen von erwarteten Ist-Zuständen des Flurförderzeugs erzeugt werden, sodass die Aktorik des erfindungsgemäßen Flurförderzeugs vorhergesagten Abweichungen proaktiv entgegenwirken kann. Insbesondere können 2D- und/oder 3D-Erfassungseinheiten zum Einsatz kommen.

Des Weiteren kann die oder wenigstens eine der Erfassungseinheiten dem oder wenigstens einem der Lasträder zugeordnet sein, sodass die Aktorwirkung gegebenenfalls unmittelbar an der Stelle eintritt, an welcher der jeweilige Betriebsparameter und/oder die Eigenschaft der Umgebung erfasst worden ist.

Alternativ oder zusätzlich kann die oder wenigstens eine der Erfassungseinheiten dem Fahrzeugkörper, dem Hubgerüst und/oder einer mit dem Fahrzeugkörper oder dem Hubgerüst verbundenen Komponente des Flurförderzeugs zugeordnet sein. Beispiele hierfür umfassen die oben bereits angesprochenen Beschleunigungssensoren, die dem Hubgerüst oder einer an diesem verfahrbaren Komponente sowie dem Fahrzeugkörper zugeordnet sein können.

Weiterhin kann in der Speichereinheit der Steuereinheit wenigstens ein räumliches Kennfeld hinterlegt sein, wobei in einer derartigen Ausführungsform die Steuereinheit ferner dazu eingerichtet ist, anhand momentaner Bewegungsparameter des Flurförderzeugs und des wenigstens einen Kennfelds eine bevorstehende Änderung des Ist-Zustands des Flurförderzeugs zu bestimmen. Indem auf diese Weise eine Topologie- oder Anregungsprofilkarte eines zu befahrenden Bereichs eines Untergrunds für die Steuereinheit zur Verfügung gestellt wird, kann die Aktorik des erfindungsgemäßen Flurförderzeugs entsprechend in einer geeigneten Weise von der Steuereinheit angesteuert werden. Als Schlüsselparameter für das Kennfeld können beispielsweise Wertevektoren aus aktueller Position, aktueller Geschwindigkeit und aktueller Fahrtrichtung verwendet werden, aus welchen eine voraussichtliche Position für einen späteren Zeitpunkt gemeinsam mit einer erforderlichen Aktorstellung zu diesem Zeitpunkt zur Nivellierung des Fahrzeugs oder zum Entgegenwirken einer Schwingung abgeleitet werden kann.

Weiterhin kann das erfindungsgemäße Flurförderzeug wenigstens ein Empfangsgerät umfassen, welches dazu eingerichtet ist, von einer externen Einrichtung Daten zu empfangen, welche Informationen über die Position und/oder die Umgebung des Flurförderzeugs repräsentieren. In ähnlicher Weise wie die eben beschriebenen Kennfelder können auch die von der externen Einrichtung übermittelten Daten lokale Topologie- oder Anregungsinformationen enthalten. Hierbei kann neben der Übertragung von entsprechenden Daten mittels bekannter drahtloser Datenübertragungsstandards auch an entlang definierter Fahrspuren oder an geeigneten Stellen in einem frei befahrbaren Bereich positionierte Barcodes oder QR-Codes mit lokalen Topologie-Informationen gedacht werden. In ähnlicher Weise können entlang der Fahrspur oder an geeigneten Positionen Sender, beispielsweise RFID-Tags, platziert sein, die an geeignete Empfangsgeräte am erfindungsgemäßen Flurförderzeug Topologie-Informationen übertragen können.

In dem erfindungsgemäßen Flurförderzeug ist wenigstens eine Lastradachse vorgesehen, welche zwei einander gegenüberliegende Lasträder trägt. Derartige Konfigurationen von Lasträdern werden beispielsweise in Flurförderzeugen eingesetzt, welche lediglich ein angetriebenes und gelenktes Antriebsrad von der Lastradachse beabstandet aufweisen, oder Kombinationen, in welchen die Lastachse angetrieben und das weitere Rad lediglich gelenkt ist. Hierbei ist die wenigstens eine Lastradachse um eine horizontal senkrecht zu der Lastradachse verlaufende Schwenkebene oder mittels eines elastischen Elements schwenkbar an dem Fahrzeugkörper aufgehängt und der wenigstens eine Aktor dazu eingerichtet, ein Schwenken der Lastradachse zu bewirken, wobei ggf. ferner ein Dämpfungselement zum Dämpfen der Schwenkbewegung zwischen der Schwenkachse bzw. dem elastischen Element und dem Fahrzeugkörper angeordnet sein kann.

Hierbei kann die Schwenkachse entweder mittig in Fahrzeugbreitenrichtung des Flurförderzeugs oder seitlich versetzt angeordnet sein. Ebenfalls können in Ausführungsformen mit einem einzelnen Dämpfungselement und einem einzelnen Aktor diese an gegenüberliegenden oder derselben Seite der Schwenkachse vorgesehen sein. Als mögliche Aktoren kann an Hydraulikzylinder, Hubmagnete, Gewindespindel, Linearmotoren, Zahnstangen, Piezoelemente, etc. gedacht werden, wobei ein typischer Hub in vertikaler Richtung etwa ±3 mm betragen kann.

Als Dämpfungselement und insbesondere auch zum Lastausgleich könnte ferner eine mechanische Feder oder ein hydraulischer Dämpfer zum Einsatz kommen, wobei im Fall einer Feder diese derart ausgelegt sein kann, dass im entsprechenden Aktor stets ein Druck ansteht. Im Fall, dass ein doppelt wirkender Zylinder als Aktor vorgesehen ist, kann das Dämpfungselement auch ohne Weiteres entfallen. In einer Variante könnten auch zwei doppeltwirkende Zylinder symmetrisch um den Drehpunkt als jeweilige Aktoren angeordnet sein, um die aufzubringenden Kräfte aufteilen zu können und eine kleinere Dimensionierung davon zu ermöglichen. Dies erfordert jedoch eine synchrone Ansteuerung der beiden Zylinder.

Im Fall, dass ein elastisches Element zur schwenkbaren Aufhängung der Lastradachse an dem Fahrzeugkörper vorgesehen ist, kann dieses seitlich in Fahrzeugbreitenrichtung angeordnet sein und somit ein Schwenken der Achse ermöglichen. Hierbei kann das elastische Element beispielsweise durch eine Plattfeder, einen Torsionsstab, eine Elastomerfeder oder Ähnliches gebildet sein und die Anpassung der Lage der Lastradachse kann durch einen Aktor von einem der oben genannten Typen gegenüberliegend zu dem elastischen Element vorgenommen werden, wobei der Aktor erneut durch ein Dämpfungselement unterstützt sein kann.

Ferner kann eine Führungseinheit zum Lagern der Lastradachse in der Ebene vorgesehen sein, welche durch die vertikale Richtung und die Erstreckungsrichtung der Lastradachse aufgespannt ist.

Weitere Merkmale und Vorteile der vorliegenden Erfindung werden aus der nachfolgenden Beschreibung von Ausführungsformen davon deutlich, wenn diese gemeinsam mit den beiliegenden Figuren betrachtet wird. Diese zeigen im Einzelnen:
- Figuren 1A, 1B und 1D: schematische Querschnittsansichten von erfindungsgemäßen Flurförderzeugen mit unterschiedlichen Varianten von Lastachsen;
- Fig. 1C: eine schematische Querschnittsansicht eines Vergleichsbeispiels eines Flurförderzeugs mit einer anderen Variante einer Lastachse;
- Figur 2: eine isometrische Ansicht der Variante aus Figur 1C;
- Figur 3: eine schematische Ansicht einer weiteren Variante einer Lastachse in einem Flurförderzeug gemäß einem Vergleichsbeispiel;
- Figuren 4A - 4E: schematische Querschnitte durch weitere Vergleichsbeispiele von Flurförderzeugen mit einzeln aufgehängten Lasträdern sowie Varianten derartiger Lasträder; und
- Figur 5: eine schematische Darstellung der funktionellen Komponenten eines erfindungsgemäßen Flurförderzeugs.

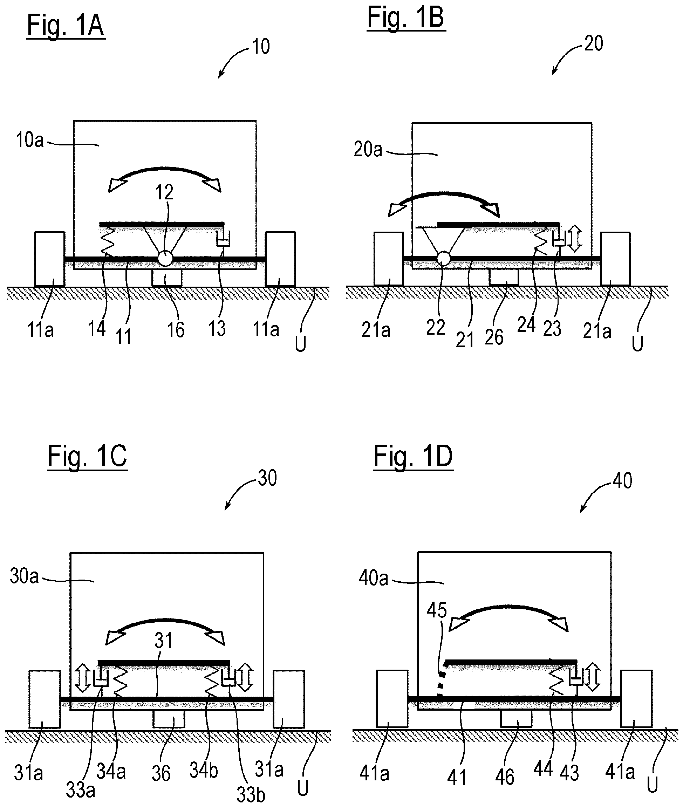

Die Figuren 1A, 1B und1D zeigen zunächst schematische Querschnittsansichten durch Varianten von erfindungsgemäßen Flurförderzeugen im Bereich ihrer jeweiligen Lastradachsen, während die Figur 1C eine ähnliche Ansicht eines Vergleichsbeispiels eines Flurförderzeugs zeigt. Im Folgenden sind jeweils gleiche oder ähnliche Komponenten der einzelnen Ausführungsformen mit gleichen Bezugszeichen, jeweils erhöht um ein Vielfaches von 10, bezeichnet, und es wird aus Gründen der Lesbarkeit teilweise auf eine detaillierte Beschreibung davon verzichtet.

Hierbei zeigt Figur 1A zunächst eine erste Ausführungsform eines erfindungsgemäßen Flurförderzeugs 10 mit einem Fahrzeugkörper 10a und einer Lastradachse 11, welche an ihren beiden Seiten jeweilige Lasträder 11a trägt, mit welchen das Flurförderzeug 10 auf einem Untergrund U aufsteht. Außerhalb der Schnittebene ist ferner ein einzelnes gelenktes und angetriebenes Rad 16 angedeutet, welches ebenfalls auf dem Untergrund U aufsteht und für den Antrieb und die Lenkung des Fahrzeugs 10 verantwortlich ist. In anderen Varianten könnte die Lastradachse 11 auch angetrieben sein und das weitere Rad 16 lediglich gelenkt.

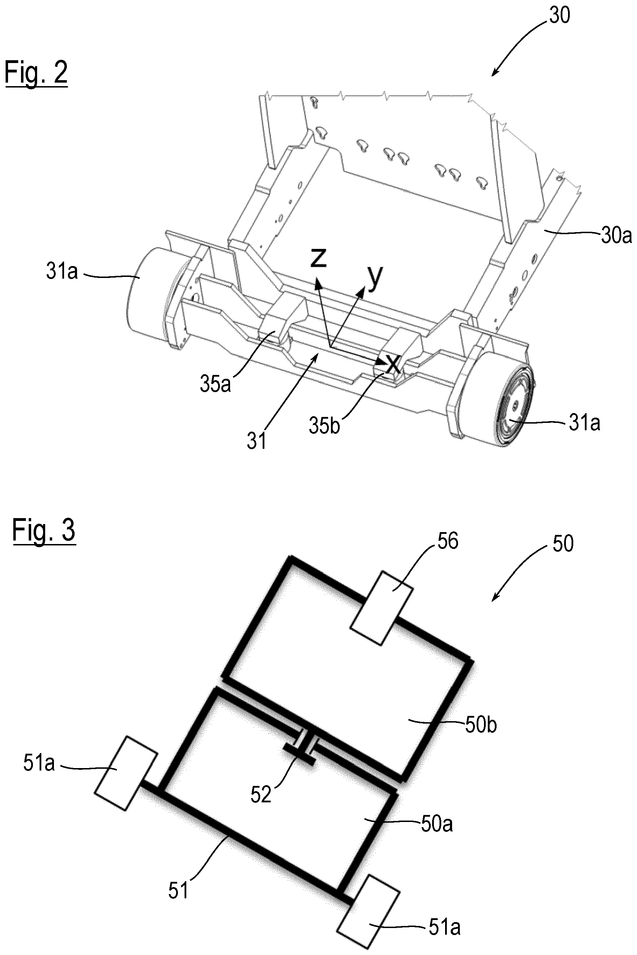

Die Lastradachse 11 ist um eine in Breitenrichtung des Flurförderzeugs 10 mittig angeordnete Schwenkachse 12 schwenkbar an dem Fahrzeugkörper 10a des Fahrzeugs 10 aufgehängt, wobei die Schwenkachse 12 in Fahrzeuglängsrichtung (y) verläuft, so dass die Schwenkbewegung der Lastradachse 11 in der Ebene verläuft, die durch die Fahrzeugbreitenrichtung (x) und die Fahrzeughöhenrichtung (z) aufgespannt wird. Die entsprechenden Richtungen und Achsen werden weiter unten anhand Figur 2 noch einmal illustriert werden, wobei in Figur 1A zudem durch einen Doppelpfeil die Schwenkbewegung des Fahrzeugkörpers 10a gegenüber dem Untergrund U bei einer Längenänderung eines Aktors 13 angedeutet ist.

Seitlich in einer ersten Richtung gegenüber der Schwenkachse 12 versetzt ist dieser längenveränderliche Aktor 13 zwischen dem Fahrzeugkörper 10a und der Lastradachse 11 vorgesehen, mittels welchem eine Schwenkbewegung zwischen der Lastradachse 11 und dem Fahrzeugkörper 10a bewirkt werden kann. Auf der in der Fahrzeugbreitenrichtung anderen Seite der Schwenkachse 12 liegt dem Aktor 13 ein Dämpfungselement 14 gegenüber, welches die von dem Aktor 13 bewirkten oder während des vorgesehenen Betriebs des Flurförderzeugs 10 auftretenden Schwenkbewegungen und Vibrationen der Lastradachse 11 dämpft.

Als mögliche Beispiele für derartige längenveränderliche Aktoren 13 kann an Hydraulikzylinder, Hubmagnete, Gewindespindeln, Linearmotoren, Zahnstangen, Piezoelemente, etc. gedacht werden, welche kontrolliert ansteuerbar sind und deren typischer Hub in vertikaler Richtung etwa ±3 mm betragen kann. Als Dämpfungselement 14 kann hingegen eine mechanische Feder oder ein hydraulischer Dämpfer zum Einsatz kommen, wobei im Fall einer Feder diese derart ausgelegt sein kann, dass im entsprechenden Aktor 13 stets ein Druck ansteht.

In Figur 1B ist eine weitere Variante eines erfindungsgemäßen Flurförderzeugs gezeigt und mit dem Bezugszeichen 20 bezeichnet. Im Gegensatz zu der Variante aus Figur 1A befindet sich in der Variante aus Figur 1B die Schwenkachse 22 der Lastradachse 21 außerhalb der Mitte der Breitenrichtung des Flurförderzeugs 20 und der Aktor 23 und das Dämpfungselement 24 sind beide auf derselben Seite der Schwenkachse 22 in Fahrzeugbreitenrichtung angeordnet.

Ein erstes Vergleichsbeispiel eines Flurförderzeugs aus Figur 1C zeigt wiederum ein Flurförderzeug 30, in welchem auf eine Schwenkachse zur Aufhängung der Lastradachse 31 verzichtet worden ist, da diese stattdessen durch jeweilige Paare 33a und 33b von Aktoren sowie 34a und 34b von Dämpfungselementen jeweils beabstandet voneinander in Fahrzeugbreitenrichtung aufgehängt ist. Diese Ausführungsvariante ist in Figur 2 in einer isometrischen Ansicht erneut dargestellt, wobei dort der Fahrzeugkörper 30a und die Räder 31a deutlicher zu erkennen sind und die Fahrzeugbreitenrichtung mit x, die Fahrzeuglängsrichtung mit y und die Fahrzeughöhenrichtung mit z gekennzeichnet sind. Hierbei sind jeweilige Paare aus einem der Aktoren 33a, 33b und einem der Dämpfungselemente 34a, 34b als Funktionseinheiten in dafür vorgesehenen Gehäusen 35a und 35b aufgenommen, es sei in diesem Zusammenhang jedoch auch noch darauf hingewiesen, dass je nach Wahl der Aktoren 33a und 33b in einer solchen Ausführungsvariante auf Dämpfungselemente 34a, 34b vollständig verzichtet werden könnte.

Figur 1D zeigt eine weitere Ausführungsvariante eines erfindungsgemäßen Flurförderzeugs 40, in welchem zur Aufhängung der Lastradachse 41 anstelle einer Schwenkachse ein elastisches Element 45 vorgesehen ist, welches beispielsweise durch einen Torsionsstab gebildet sein kann. Dieser Torsionsstab 45 ist in der in Figur 1D gezeigten Ausführungsvariante analog zu der Schwenkachse 22 aus Figur 1B in Fahrzeugbreitenrichtung versetzt gegenüber der Mitte angeordnet und der Aktor 43 und das Dämpfungselement 44 befinden sich auf derselben Seite davon.

Figur 3 zeigt nun in einer schematischen Draufsicht ein weiteres Vergleichsbeispiel eines Flurförderzeugs 50 mit einem zweiteiligen Fahrzeugrahmen, welcher in der Art eines Knicklenkers ausgebildet ist und einen ersten Rahmenteil 50a und einen zweiten Rahmenteil 50b umfasst. Hierbei ist die Lastradachse 51 dem ersten Rahmenteil 50a zugeordnet, während der zweite Rahmenteil 50b beispielsweise das nicht dargestellte Hubgerüst tragen kann. Ebenfalls ist dem zweiten Rahmenteil 50b ein gelenktes und angetriebenes weiteres Rad 56 zugeordnet. Die schwenkbare Verbindung der beiden Rahmenteile 50a und 50b kann in analoger Weise zu den Ausführungsformen aus den Figuren 1A und 1B mittels einer Schwenkachse 52 erfolgen, welche in Fahrzeuglängsrichtung (y-Richtung) des Flurförderzeugs 50 orientiert ist.

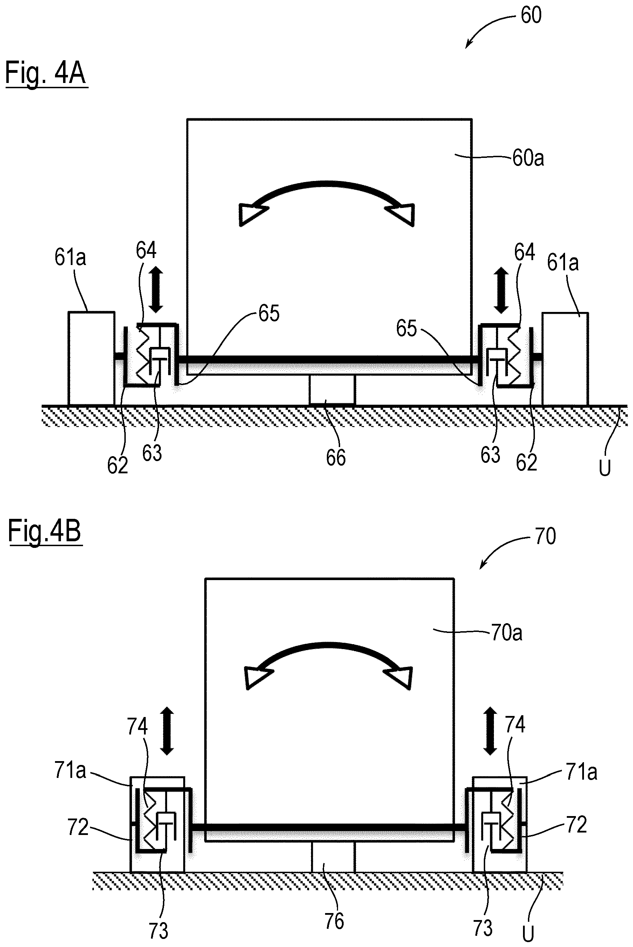

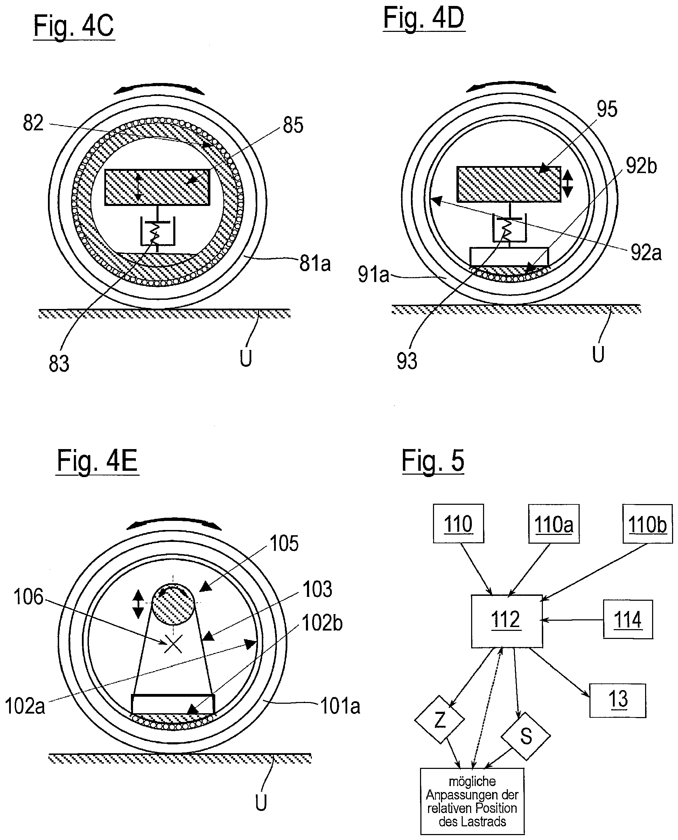

Die Figuren 4A und 4B zeigen nun zwei weitere Vergleichsbeispiele von Flurförderzeugen in ähnlichen Ansichten wie die Figuren 1A bis 1D, wobei jedoch die entsprechenden Räder der Flurförderzeuge nicht mittels einer gemeinsamen Lastradachse getragen, sondern jeweils einzeln aufgehängt sind. Beispiele für entsprechende Einzelradaufhängungen sind dann in den Figuren 4C bis 4E noch einmal dargestellt.

Die Figur 4A zeigt dementsprechend ein Vergleichsbeispiel eines Flurförderzeugs 60 mit einem Fahrzeugkörper 60a, an welchem zwei Lasträder 61a in identischer Weise einander in Fahrzeugbreitenrichtung gegenüberliegend einzeln aufgehängt sind. Die Lasträder 61a sind hierbei, wie durch jeweilige Doppelpfeile angedeutet, gegenüber dem Fahrzeugkörper 60a in Höhenrichtung relativ verlagerbar, wodurch die ebenfalls durch einen Doppelpfeil angedeutete Schwenkbewegung des Fahrzeugkörpers 60a gegenüber dem Untergrund U ausgelöst werden kann. Hierzu sind die beiden Lasträder 61a jeweils auf einer Flanschplatte 62 getragen, welche über einen Aktor 63 und ein Dämpfungselement 64 an einem entsprechenden, dem Fahrzeugkörper 60a zugeordneten Gegenstück 65 befestigt sind. Durch eine asynchrone Ansteuerung der beiden Aktoren 63 kann somit das oben angesprochene Neigen des Fahrzeugkörpers 60a gegenüber dem Untergrund U erzielt werden.

In der Variante eines Flurförderzeugs 70 aus Figur 4B sind im Gegensatz zu der Variante aus Figur 4A die Aktoren 73 und Dämpfungselemente 74 jeweils in einer Ansicht entlang der Höhenrichtung (z-Richtung) innerhalb der Kontur der Radkörper 71a aufgenommen, indem die Flanschplatten 72 die Radkörper jeweils in Breitenrichtung des Fahrzeugs 70 nach außen abschließen. Hierdurch wird bei gleicher Funktion verglichen mit der Variante aus Figur 4A deutlich Bauraum eingespart.

Drei Varianten der im Zusammenhang mit der Figur 4B diskutierten Einzelradaufhängung sind nun in Figuren 4C bis 4E gezeigt. Hierbei ist in der Figur 4C ein Lastrad 81a mittels eines Radlagers 82 rotierbar getragen, welches Radlager 82 mittels eines Aktors 83 und ggf. eines nicht dargestellten Dämpfungselements an einem Fixpunkt 85 an einem Gegenelement dem nicht dargestellten Fahrzeugkörper zugeordnet ist.

Im Gegensatz hierzu wird in der Variante aus Figur 4D auf das Radlager verzichtet und es kommt zum rotierbaren Tragen des Lastrads 91a lediglich ein an einer kreisrunden Linearführung 92a eingreifender Führungswagen 92b zum Einsatz, welcher jedoch in analoger Weise über einen Aktor 93 und ggf. ein Dämpfungselement an einem Fixpunkt 95 dem nicht dargestellten Fahrzeugrahmen zugeordnet ist.

Zuletzt zeigt die Figur 4E eine weitere Variante einer Einzelradaufhängung, in welcher ein Lastrad 101a ebenfalls mittels einer Linearführung 102a rotierbar getragen ist, wobei diese jedoch einem Hebelelement 103 zugeordnet ist, welches wiederum schwenkbar an einem Fixpunkt 105 an dem nicht dargestellten Fahrzeugrahmen gelagert ist, wobei der Fixpunkt 105 gegenüber dem Drehzentrum 106 des Lastrads 101a versetzt ist. Indem nun ein nicht gezeigter Aktor dazu eingerichtet ist, eine Schwenkbewegung des Hebelelements 103 hervorzurufen, kann durch den Versatz des Fixpunkts 106 von dem Drehzentrum 105 ebenfalls eine relative Verlagerung zwischen Lastrad 101a und dem nicht dargestellten Fahrzeugkörper in Höhenrichtung mit einem weiteren Beitrag in Längsrichtung des Fahrzeugs erzielt werden.

Zuletzt zeigt Figur 5 nun ein schematisches Funktionsdiagramm von funktionellen Komponenten eines erfindungsgemäßen Flurförderzeugs, wie sie mit jeder der eben diskutierten Ausführungsformen von Lastradanordnungen eingesetzt werden können. Insbesondere zeigt Figur 5 einen der angesprochenen Aktoren, beispielsweise den Aktor 13 aus Figur 1A, den Aktor 23 aus Figur 1B, etc., wobei aus Gründen der Lesbarkeit im Folgenden jeweils lediglich der Aktor 13 genannt werden wird.

Wie angesprochen, ist dieser Aktor 13 dazu eingerichtet, eine relative Position eines Lastrads bezüglich des Fahrzeugkörpers in einem erfindungsgemäßen Flurförderzeug anzupassen. Weiterhin umfasst die Anordnung aus Figur 5 eine Erfassungseinheit 110, welche dazu eingerichtet ist, einen momentanen Betriebsparameter des Flurförderzeugs zu erfassen und entsprechende Daten auszugeben. Diese Daten werden an eine Steuereinheit 112 mit einer zugeordneten Speichereinheit 114 weitergegeben, welche mit dem Aktor 13 betriebsmäßig gekoppelt ist. Die Steuereinheit 112 und auch die Speichereinheit 114 können hierbei von beliebigen bekannten Typen sein und beispielsweise mit einer zentralen Steuerung des entsprechenden Flurförderzeugs betriebsmäßig gekoppelt oder darin integriert sein.

Ferner kann auch noch wenigstens eine weitere Erfassungseinheit 110a in dem Fahrzeug bereitgestellt sein, welche wenigstens eine Eigenschaft der Umgebung des Fahrzeugs erfasst und entsprechende Daten an die Steuereinheit 112 ausgibt. Alternativ oder zusätzlich kann in dem Fahrzeug ein Empfangsgerät 110b vorgesehen sein, welches dazu eingerichtet ist, von einer externen Einrichtung Daten zu empfangen, welche Informationen über die Position oder die Umgebung des Flurförderzeugs repräsentieren.

Hierbei ist die Steuereinheit 112 dazu eingerichtet, einen Sollzustand S des Flurförderzeugs zu definieren, Daten von der Erfassungseinheit 110 zu erhalten, anhand der erfassten Betriebsparameter des Flurförderzeugs einen Istzustand Z des Flurförderzeugs zu bestimmen, Auswirkungen möglicher Anpassungen der relativen Position des Lastrads 11a bezüglich des Fahrzeugkörpers 10a auf den Istzustand Z des Flurförderzeugs zu berechnen und daraufhin den Aktor 13 derart anzuweisen, dass durch eine Anpassung der relativen Position des Lastrads 11a bezüglich des Fahrzeugkörpers 10a eine Annäherung des Istzustands Z des Flurförderzeugs zu einem Sollzustand S bewirkt wird.

## Patentansprüche

1. Flurförderzeug (10), insbesondere Schmalgang-Stapler, umfassend:
- einen Fahrzeugkörper (10a);
- ein Hubgerüst, welches sich von dem Fahrzeugkörper (10a) im Wesentlichen vertikal erstreckt;
- wenigstens ein Lastrad (11a), welches auf einem Untergrund (U) aufsteht;
- wenigstens ein weiteres Rad, welches ebenfalls auf dem Untergrund aufsteht, beispielsweise ein gelenktes Antriebsrad (16), welches dazu eingerichtet ist, das Flurförderzeug (10) in einer gelenkten Weise zu einer Bewegung auf dem Untergrund (U) anzutreiben;
- wenigstens einen dem wenigstens einen Lastrad (11a) zugeordneten Aktor (13), welcher dazu eingerichtet und angeordnet ist, eine relative Position des Lastrads (11a) bezüglich des Fahrzeugkörpers (10a) anzupassen;
- wenigstens eine Erfassungseinheit (110), welche dazu eingerichtet ist, einen momentanen Betriebsparameter des Flurförderzeugs (10) zu erfassen und entsprechende Daten auszugeben; und
- eine Steuereinheit (112) mit einer zugeordneten Speichereinheit (114), welche betriebsmäßig mit dem wenigstens einen Aktor (13) und der wenigstens einen Erfassungseinheit (110) gekoppelt und dazu eingerichtet ist:
∘ einen Soll-Zustand (S) des Flurförderzeugs (10) zu definieren;
∘ Daten von der Erfassungseinheit (110) zu erhalten;
∘ anhand der erfassten Betriebsparameter des Flurförderzeugs (10) einen Ist-Zustand (Z) des Flurförderzeugs (10) zu bestimmen;
∘ Auswirkungen möglicher Anpassungen der relativen Position des Lastrads (11a) bezüglich des Fahrzeugkörpers (10a) auf den Ist-Zustand (Z) des Flurförderzeugs (10) zu berechnen; und
∘ den wenigstens einen Aktor (13) derart anzuweisen, dass durch eine Anpassung der relativen Position des Lastrads (11a) bezüglich des Fahrzeugkörpers (10a) eine Annäherung des Ist-Zustands (Z) des Flurförderzeugs (10) an den Soll-Zustand (S) bewirkt wird,
**dadurch gekennzeichnet, dass** wenigstens eine Lastradachse (11) vorgesehen ist, welche zwei einander gegenüberliegende Lasträder (11a) trägt,
wobei die wenigstens eine Lastradachse (11) um eine horizontal senkrecht zu der Lastradachse (11) verlaufende Schwenkachse (12) oder mittels eines elastischen Elements (45) schwenkbar an dem Fahrzeugkörper (10a) aufgehängt ist und der wenigstens eine Aktor (13) dazu eingerichtet ist, ein Schwenken der Lastradachse (12) zu bewirken, wobei ggf. ferner ein Dämpfungselement (14) zum Dämpfen der Schwenkbewegung zwischen der Schwenkachse (12) bzw. dem elastischen Element (45) und dem Fahrzeugkörper (10a) und/oder zu einem Lastausgleich angeordnet ist.

2. Flurförderzeug (10) nach Anspruch 1, wobei die wenigstens eine Erfassungseinheit (110) dazu eingerichtet ist, wenigstens Eines zu erfassen aus:
- einer Neigung des Fahrzeugkörpers (10a) gegenüber dem Untergrund (U) und/oder der Horizontalen; und
- einer Beschleunigung und/oder Geschwindigkeit und/oder Neigung wenigstens einer Komponente des Flurförderzeugs (10) und/oder einer von dem Flurförderzeug (10) getragenen Last gegenüber dem Untergrund (U) und/oder wenigstens einer anderen Komponente des Flurförderzeugs (10), wobei die zu erfassende Beschleunigung insbesondere quer zu einer Fahrtrichtung des Flurförderzeugs (10) gerichtet sein kann.

3. Flurförderzeug (10) nach einem der vorhergehenden Ansprüche, ferner umfassend wenigstens eine weitere Erfassungseinheit (110a), welche dazu eingerichtet ist, wenigstens eine Eigenschaft der Umgebung des Flurförderzeugs (10) zu erfassen und entsprechende Daten an die Steuereinheit (112) auszugeben.

4. Flurförderzeug (10) nach einem der vorhergehenden Ansprüche, wobei die oder wenigstens eine der Erfassungseinheiten (110, 110a) dem oder wenigstens einem der Lasträder (11a) zugeordnet ist.

5. Flurförderzeug (10) nach einem der vorhergehenden Ansprüche, wobei die oder wenigstens eine der Erfassungseinheiten (110, 110a) dem Fahrzeugkörper (10a), dem Hubgerüst und/oder einer mit dem Fahrzeugkörper (10a) oder dem Hubgerüst verbundenen Komponente des Flurförderzeugs (10) zugeordnet ist.

6. Flurförderzeug (10) nach einem der vorhergehenden Ansprüche, wobei in der Speichereinheit (114) der Steuereinheit (112) wenigstens ein räumliches Kennfeld hinterlegt ist, wobei die Steuereinheit (112) dazu eingerichtet ist, anhand momentaner Bewegungsparameter des Flurförderzeugs (10) und des wenigstens einen Kennfelds eine bevorstehende Änderung des Ist-Zustands des Flurförderzeugs (10) zu bestimmen.

7. Flurförderzeug (10) nach einem der vorhergehenden Ansprüche, ferner umfassend wenigstens ein Empfangsgerät (110b), welches dazu eingerichtet ist, von einer externen Einrichtung Daten zu empfangen, welche Informationen über die Position oder die Umgebung des Flurförderzeugs (10) repräsentieren.

8. Flurförderzeug (10) nach einem der Ansprüche 9 und 10, ferner umfassend eine Führungseinheit zum Lagern der Lastradachse (11) in der Ebene, welche durch die vertikale Richtung (z) und die Erstreckungsrichtung (x) der Lastradachse (11) aufgespannt ist.

## Claims

1. Industrial truck (10), in particular narrow aisle forklift, comprising:
- a vehicle body (10a);
- a lifting frame which extends substantially vertically from the vehicle body (10a);
- at least one load wheel (11a) which stands on the ground (U);
- at least one further wheel, which also stands on the ground, for example a steered drive wheel (16) which is configured to drive the industrial truck (10) in a steered manner to a movement on the ground (U);
- at least one actuator (13) associated with the at least one load wheel (11a), which is configured and arranged to adjust a relative position of the load wheel (11a) with respect to the vehicle body (10a);
- at least one detection unit (110), which is configured to detect a current operating parameter of the industrial truck (10) and to output corresponding data; and
- a control unit (112) having an associated memory unit (114), which control unit is operationally coupled to the at least one actuator (13) and the at least one detection unit (110) and is configured:
∘ to define a target state (S) of the industrial truck (10);
∘ to receive data from the detection unit (110);
∘ to determine an actual state (Z) of the industrial truck (10) based on the detected operating parameters of the industrial truck (10);
∘ to calculate the effects of possible adjustments of the relative position of the load wheel (11a) with respect to the vehicle body (10a) on the actual state (Z) of the industrial truck (10); and
∘ to instruct the at least one actuator (13) in such a way that an approximation of the actual state (Z) of the industrial truck (10) to the target state (S) is brought about by adjusting the relative position of the load wheel (11a) with respect to the vehicle body (10a),
**characterised in that** at least one load wheel axle (11) is provided which carries two load wheels (11a) lying opposite one another,
wherein the at least one load wheel axle (11) is suspended on the vehicle body (10a) such that it can pivot about a pivot axle (12) running horizontally perpendicular to the load wheel axle (11) or by means of a resilient element (45), and the at least one actuator (13) is configured to cause the load wheel axle (12) to pivot, whereby, optionally, a damping element (14) is further arranged for damping the pivoting movement between the pivot axle (12) or the resilient element (45) and the vehicle body (10a) and/or for load compensation.

2. Industrial truck (10) according to claim 1, wherein the at least one detection unit (110) is configured to detect at least one of:
- an inclination of the vehicle body (10a) relative to the ground (U) and/or the horizontal; and
- an acceleration and/or speed and/or inclination of at least one component of the industrial truck (10) and/or a load carried by the industrial truck (10) with respect to the ground (U) and/or at least one other component of the industrial truck (10), wherein the acceleration to be detected can in particular be directed transversely to a direction of travel of the industrial truck (10).

3. Industrial truck (10) according to any of the preceding claims,
further comprising at least one further detection unit (110a) which is configured to detect at least one property of the surroundings of the industrial truck (10) and to output corresponding data to the control unit (112).

4. Industrial truck (10) according to any of the preceding claims,
wherein the detection unit or at least one of the detection units (110, 110a) is associated with the load wheel or at least one of the load wheels (11a).

5. Industrial truck (10) according to any of the preceding claims,
wherein the detection unit or at least one of the detection units (110, 110a) is associated with the vehicle body (10a), the lifting frame and/or a component of the industrial truck (10) connected to the vehicle body (10a) or the lifting frame.

6. Industrial truck (10) according to any of the preceding claims,
wherein at least one spatial map is stored in the memory unit (114) of the control unit (112), wherein the control unit (112) is configured to determine an upcoming change in the actual state of the industrial truck (10) based on current movement parameters of the industrial truck (10) and the at least one map.

7. Industrial truck (10) according to any of the preceding claims,
further comprising at least one receiving device (110b) which is configured to receive data from an external means which data represent information about the position or the surroundings of the industrial truck (10).

8. Industrial truck (10) according to any of claims 9 and 10,
further comprising a guide unit for mounting the load wheel axle (11) in the plane which is spanned by the vertical direction (z) and the extension direction (x) of the load wheel axle (11).

## Revendications

1. Chariot de manutention (10), en particulier chariot élévateur pour allées étroites, comprenant :
- un corps de véhicule (10a) ;
- un mât s'étendant sensiblement verticalement à partir du corps de véhicule (10a) ;
- au moins une roue de charge (11a) qui repose sur un sol (U) ;
- au moins une autre roue qui repose également sur le sol, par exemple une roue motrice guidée (16), qui est adaptée pour entraîner le chariot de manutention (10) d'une manière guidée en vue d'un déplacement sur le sol (U) ;
- au moins un actionneur (13) associé à ladite au moins une roue de charge (11a), qui est adapté et agencé pour adapter une position relative de la roue de charge (11a) par rapport au corps du véhicule (10a) ;
- au moins une unité de détection (110), qui est adaptée pour détecter un paramètre de fonctionnement momentané du chariot de manutention (10) et pour émettre des données correspondantes ; et
- une unité de commande (112) avec une unité de mémoire (114) associée, qui est couplée en fonctionnement avec ledit au moins un actionneur (13) et ledit au moins une unité de détection (110) et qui est adaptée pour :
∘ définir un état souhaité (S) du chariot de manutention (10) ;
∘ recevoir des données de l'unité de détection (110) ;
∘ déterminer un état réel (Z) du chariot de manutention (10) à l'aide des paramètres de fonctionnement saisis du chariot de manutention (10) ;
∘ calculer les effets d'éventuels ajustements de la position relative de la roue de charge (11a) par rapport au corps du véhicule (10a) sur l'état réel (Z) du chariot de manutention (10) ; et
∘ commander ledit au moins un actionneur (13) de telle sorte que, par une adaptation de la position relative de la roue de charge (11a) par rapport au corps de véhicule (10a), on provoque un rapprochement de l'état réel (Z) du chariot de manutention (10) de l'état souhaité (S),
**caractérisé en ce que**
au moins un axe de roue de charge (11) est prévu, qui porte deux roues de charge (11a) opposées l'une à l'autre,
dans lequel ledit au moins un axe de roue de charge (11) est suspendu à la carrosserie du véhicule (10a) de manière à pouvoir pivoter autour d'un axe de pivotement (12) s'étendant horizontalement perpendiculairement à l'axe de roue de charge (11) ou au moyen d'un élément élastique (45), et ledit au moins un actionneur (13) est adapté pour provoquer un pivotement de l'axe de roue de charge (12), sachant que, le cas échéant, ledit au moins un actionneur (13) est disposé sur la carrosserie du véhicule (10a), dans lequel en outre, un élément d'amortissement (14) est disposé pour amortir le mouvement de pivotement entre l'axe de pivotement (12) ou l'élément élastique (45) et le corps du véhicule (10a) et/ou pour une compensation de charge.

2. Chariot de manutention (10) selon la revendication 1, dans lequel ledit au moins une unité de détection (110) est agencée pour détecter au moins un élément parmi :
a. une inclinaison du corps du véhicule (10a) par rapport au sol (U) et/ou à l'horizontale ; et
b. une accélération et/ou une vitesse et/ou une inclinaison d'au moins un composant du chariot de manutention (10) et/ou d'une charge portée par le chariot de manutention (10) par rapport au sol (U) et/ou d'au moins un autre composant du chariot de manutention (10), l'accélération à détecter pouvant notamment être dirigée transversalement à un sens de déplacement du chariot de manutention (10).

3. Chariot de manutention (10) selon l'une des revendications précédentes, comprenant en outre au moins une autre unité de détection (110a), qui est adaptée pour détecter au moins une propriété de l'environnement du chariot de manutention (10) et pour émettre des données correspondantes à l'unité de commande (112).

4. Chariot de manutention (10) selon l'une des revendications précédentes, dans lequel la ou au moins une des unités de détection (110, 110a) est associée à la ou au moins une des roues de charge (11a).

5. Chariot de manutention (10) selon l'une des revendications précédentes, dans lequel la ou au moins une des unités de détection (110, 110a) est associée au corps de véhicule (10a), au mât et/ou à un composant du chariot de manutention (10) relié au corps de véhicule (10a) ou au mât.

6. Chariot de manutention (10) selon l'une des revendications précédentes, dans lequel au moins un champ caractéristique spatial est enregistré dans l'unité de mémoire (114) de l'unité de commande (112), dans lequel l'unité de commande (112) est adaptée pour déterminer une modification imminente de l'état réel du chariot de manutention (10) à l'aide de paramètres de mouvement momentanés du chariot de manutention (10) et dudit au moins un champ caractéristique.

7. Chariot de manutention (10) selon l'une des revendications précédentes, comprenant en outre au moins un appareil de réception (110b) adapté pour recevoir d'un dispositif externe des données représentatives d'informations sur la position ou l'environnement du chariot de manutention (10).

8. Chariot de manutention (10) selon l'une des revendications 9 et 10, comprenant en outre une unité de guidage pour le montage de l'axe de roue de charge (11) dans le plan qui est défini par la direction verticale (z) et la direction d'extension (x) de l'axe de roue de charge (11).
